(19) Europäisches Patentamt / European Patent Office / Office européen des brevets

(11) **EP 2 732 304 B1**

(12) **EUROPÄISCHE PATENTSCHRIFT**

(45) Veröffentlichungstag und Bekanntmachung des Hinweises auf die Patenterteilung:
**19.10.2016  Patentblatt 2016/42**

(51) Int Cl.:
*G01S 5/00* *(2006.01)*    *H04W 56/00* *(2009.01)*
*G01S 5/06* *(2006.01)*

(21) Anmeldenummer: **12766859.8**

(22) Anmeldetag: **13.07.2012**

(86) Internationale Anmeldenummer:
**PCT/DE2012/000726**

(87) Internationale Veröffentlichungsnummer:
**WO 2013/007245 (17.01.2013 Gazette 2013/03)**

(54) **VERFAHREN UND SYSTEM ZUR ORTUNG EINER MOMENTANEN POSITION ODER EINES EINKOPPELORTS EINER MOBILEN EINHEIT MITTELS LECKWELLENLEITERS**

METHOD AND SYSTEM FOR LOCATING A CURRENT POSITION OR A COUPLING LOCATION OF A MOBILE UNIT USING A LEAKY WAVEGUIDE

PROCÉDÉ ET SYSTÈME DE DÉTERMINATION D'UNE POSITION MOMENTANÉE OU D'UN LIEU DE COUPLAGE D'UNE UNITÉ MOBILE AU MOYEN D'UN GUIDE D'ONDES À FUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2011   DE 102011107164**

(43) Veröffentlichungstag der Anmeldung:
**21.05.2014   Patentblatt 2014/21**

(73) Patentinhaber: **Symeo GmbH**
**85579 Neubiberg (DE)**

(72) Erfinder:
• **CHRISTMANN, Mark**
**81825 München (DE)**
• **GULDEN, Peter**
**80636 München (DE)**

(74) Vertreter: **Popp, Eugen**
**Meissner Bolte Patentanwälte**
**Rechtsanwälte Partnerschaft mbB**
**Postfach 86 06 24**
**81633 München (DE)**

(56) Entgegenhaltungen:
WO-A1-94/07222    WO-A1-94/28432
US-A1- 2004 210 350    US-A1- 2004 260 506
US-A1- 2008 002 864    US-A1- 2010 253 532

EP 2 732 304 B1

**Beschreibung**

Verfahren und System zur Ortung einer momentanen Position oder eines Einkoppelorts einer mobilen Einheit mittels Leckwellenleiters

Die Erfindung bezieht sich auf ein Verfahren und ein Verfahren und System zur Ortung einer momentanen Position oder eines Einkoppelorts einer mobilen Einheit mittels Leckwellenleiters.

In der Kommunikationstechnik besteht das Problem einer zuverlässigen Kommunikation und zudem das Problem einer Ortung von personen- und fahrzeuggetragenen Sendern in Tunnelanlagen, beispielsweise beim Personentransport, beim Tunnelbau oder beim Bergbau.

In diesem Bereich werden zur Kommunikation mit beispielsweise Mobiltelefonen besondere Einrichtungen zum Senden und Empfangen verwendet, beispielsweise als Kabel sogenannte Schlitz- bzw. Leckwellenleiter. Solche Leckwellenleiter sind im Prinzip Koaxialkabel, die über Schlitze im Mantelbereich verfügen. Durch diese Schlitze koppelt eine elektromagnetische Welle je nach Ausbreitungsrichtung in die Luft bzw. ins Kabel ein. Auf Grund der langen Ausdehnung der Kabel und des Einkoppelmechanismus handelt es sich hierbei um einen komplexen Vorgang im Nahfeld der Antenne, d.h. der Übergang lässt sich nicht leicht simulieren und ist nicht durch übliche Fernfeldapproximationen anzunähern.

Deshalb sind bisherige Versuche zur Ortung von Funksendern über die Bestimmung von deren Feldstärke bzw. deren Feldstärkeabfalls sehr ungenau. Ein solcher Versuch ist beispielsweise bekannt aus [Weber] Weber et. al., "Indoor RF Fingerprinting using leaky feeder cable considering environmental changes", Proceedings of ACM Mobility Conference 2009, Sept. 2-4 2009, Nice, France. Hinzu kommt, dass der wesentliche Teil des Leistungsabfalls und der Leistungsfluktuation auf der Strecke zwischen Funkeinheit und Kabel erfolgt, mit beispielsweise 30 - 70 dB, und der Leistungsabfall entlang des Kabels recht gering ist, mit beispielsweise 1,5 dB/m. Somit verfälschen kleine Schwankungen der Feldstärke das Ergebnis bereits erheblich.

Neben der Feldstärkemessung kann auch eine Laufzeitmessung erfolgen. Allerdings ist eine Messung entlang des Leckwellenleiters technisch komplex. Wird z.B. mittels Rundlaufzeitmessung (round-trip time-of-flight) die Entfernung zu einer Seite gemessen, dann beinhaltet diese sowohl die Laufzeit durch die Luft als auch die Laufzeit entlang des Kabels. Eine sequentielle Messung zuerst zu einem Ende, dann zum anderen Ende ist prinzipiell möglich, benötigt jedoch eine genaue Abstimmung der Messzeitschlitze, verdoppelt den Kommunikationsaufwand und ist zudem auf Grund der sequentiellen Messung und dem schnell variierenden Funkkanal stark fehlerbehaftet. Ebenfalls nachteilig ist die Notwendigkeit einer 2-Wege Kommunikation, da diese technisch komplexer ist und zudem die maximal mögliche Messrate mit der Anzahl der mobilen Einheiten abnimmt.

Nishikawa et al, "A new position detection method using Leaky Coaxial Cable", IEICE Electronics Express, vol. 5, no. 8, pp. 285-290, 2008, beschreibt beispielsweise eine Anordnung und ein Verfahren zur Bestimmung der Position eines Empfängers, bei dem ein Leckwellenleiter verwendet wird. Der Leckwellenleiter weist aufeinanderfolgend jeweils Gruppen von Schlitzen auf, wobei die Schlitze der einen Gruppe in einer Richtung geneigt sind und die Schlitze der anderen Gruppe in einer entgegengesetzten Richtung geneigt sind. Der Empfänger empfängt ein in ein Ende des Leckwellenleiters gespeistes Signal direkt und zeitlich später dieses Signal, nachdem es am anderen Ende des Leckwellenleiters reflektiert wurde. Bestimmt wird durch den Empfänger der zeitliche Unterschied des direkt empfangenen und des reflektierten empfangenen Signals. Das dort verwendete Verfahren ist jedoch auf Grund der hohen Dynamikunterschiede und der Störung der Kommunikation durch die Terminierung, insbesondere sogenannte Intersymbol-Interferenz, nicht praktikabel.

Eine solche Ausgestaltung mittels einer Fehlterminierung des zweiten Kabelendes und Bestimmung der Entfernung aus der Differenz der beiden Echos weist technisch gravierende Nachteile auf. Auf Grund des großen Dynamikunterschiedes der beiden Signale ist die sichere Unterscheidung nicht gegeben. Zudem laufen die Signale bei Ortung in der Nähe des nicht angepassten Kabelendes ineinander und sind nicht auflösbar, eine Positionsbestimmung ist dort also nicht möglich. Ein weiterer Nachteil ist, dass bei gleichzeitiger Verwendung des Kabels für Kommunikation diese durch die Reflektionen am losen Ende empfindlich gestört wird, beispielsweise durch das Auftreten von Intersymbolinterferenz (ISI / Intersymbol Interference). Die vorher genannten Nachteile der notwendigen 2-Weg Kommunikation, wie Messrate, technische Komplexität, bleiben ebenfalls bestehen.

In anderem technischen Gebiet z.B. der Ortung von Fahrzeugen in großen Hallen und auf Güterumschlagplätzen ist aus US 7594133 B2 [Sym06] ein Verfahren zur Synchronisation von Takteinrichtungen bekannt, bei dem eine Sendeeinheit mindestens ein schmalbandiges Vorsignal aussendet, Takteinrichtungen von Empfangseinheiten durch eine Ankopplung auf ein solches Vorsignal auf die Quelle des Vorsignals vorsynchronisiert werden, die Sendeeinheit nach einer bestimmten Wartezeit ein breitbandiges Messsignal aussendet und die Empfangseinheiten dieses Signal empfangen, die Empfangseinheiten das breitbandige Messsignal mit einem gleichartig modulierten Vergleichssignal korrelieren und basierend auf dem Korrelationsergebnis der Empfangszeitpunkt des breitbandigen Messsignals bestimmt und die Abweichung der Synchronisation der Takteinrichtungen bestimmt und kompensiert wird. Derartige bestehende Funkortungsverfahren müssen auf Grund von Ausbreitungsbedingungen wie Reflektion, Abschattungen und Delayspread mit hohem technischen Aufwand für die Infrastruktur, wie beispielsweise viele ortsfeste Referenzeinheiten, realisiert werden und finden deshalb außer im Bereich von z.B. großen Hallen und Güterumschlagplätzen wenig Verbreitung. Die Ortung von personen- und fahrzeuggetragenen Sendern in Tunnelanlagen, beispielsweise im Tunnelbau oder im Bergbau, stellt hierfür somit ebenfalls ein technisch schwierig zu lösendes Problem dar.

In diesem für die Kommunikationstechnik gattungsfremden technischen Gebiet bekannt sind aus DE 101 57 931 C2 bzw. US 7,940,743 B2 [Sym16] auch ein Verfahren zum Synchronisieren von Funkstationen aufeinander und ein zeitsynchrones Bussystem. Eine Senderstation und eine Empfängerstation kommunizieren über eine Schnittstelle miteinander, wobei in der Senderstation ein Sendesignal mit einer Signalquelle erzeugt und über die Schnittstelle ausgesendet wird und wobei in der Empfängerstation ein entsprechendes Empfangssignal von der Schnittstelle empfangen wird. Zum Synchronisieren der Senderstation und der Empfängerstation wird ein Empfänger-Signalquellensignal von einer an die senderseitige Signalquelle angepassten empfängerseitigen Signalquelle ausgewertet. Sowohl auf das Sendesignal als auch auf das Empfänger-Signalquellensignal wird dabei eine gleichartige Frequenzmodulation angewendet. Das in der Empfängerstation empfangene Empfangssignal wird mit dem Empfänger-Signalquellensignal zu einem Mischsignal gemischt und das Mischsignal wird spektral analysiert. Auch dieses Verfahren wurde jedoch insbesondere für den Bereich der Ortung von Fahrzeugen und Gütern in großen Hallen und auf Güterumschlagplätzen entwickelt.

WO 1994028432 A1 beschreibt ein Nachverfolgungssystem mit einer Basisstation und einem Empfänger, die beide Signale von einer Vielzahl von Sendequellen empfangen können. Zwischen Basisstation und Empfänger ist ein Signal austauschbar, um die relative Position des Empfängers zu bestimmen. Um die Position in einem Tunnel bestimmen zu können, sind an beiden gegenüberliegenden Tunneleingängen zwei Sender mit jeweils einem Leiter angeordnet, wobei die beiden Leiter von den entgegengesetzten Seiten durch den Tunnel führen und zwei Hilfs-Signale zu dem Empfänger senden. Die Leiter können als Leckwellenleiter ausgebildet sein.

Die Aufgabe der Erfindung besteht darin, ein Verfahren und ein System mit dessen Komponenten zur Ortung einer momentanen Position oder eines Einkoppelorts einer mobilen Einheit mittels Leckwellenleiters zu verbessern. Insbesondere soll die Positionsbestimmung mit einfachen Mitteln genauer und zuverlässiger ermöglicht werden.

Diese Aufgabe wird durch das Verfahren zur Ortung einer momentanen Position oder eines Einkoppelorts einer mobilen Einheit mittels Leckwellenleiters mit den Merkmalen des Patentanspruchs 1 bzw. das System zur Ortung einer momentanen Position oder eines Einkoppelorts einer mobilen Einheit mittels Leckwellenleiters mit den Merkmalen des Patentanspruchs 9 gelöst. Vorteilhafte Ausgestaltungen sind Gegenstand von abhängigen Ansprüchen.

Bevorzugt wird demgemäß insbesondere ein Verfahren zur Ortung einer momentanen Position oder eines Einkoppelorts einer für Ortungszwecke zumindest sende- oder empfangsfähigen mobilen Einheit mittels Leckwellenleiters, bei dem von der mobilen Einheit in den Leckwellenleiter oder aus dem Leckwellenleiter zu der mobilen Einheit zumindest ein Funksignal insbesondere über Leckstellen des Leckwellenleiters übertragbar ist. Dabei wird das Funksignal von der mobilen Einheit gesendet und von den zwei Sende- und Empfangsvorrichtungen empfangen oder je ein derartiges Funksignal wird von den beiden Sende- und Empfangsvorrichtungen gesendet und von der mobilen Einheit empfangen. Zu den empfangenen Funksignalen wird jeweils ein Empfangszeitpunkt ermittelt und aus zwei solchen Empfangszeitpunkten wird die momentane Position oder der Einkoppelort bestimmt, wobei vor dem Bestimmen der momentanen Position oder des Einkoppelorts oder vor dem Empfangen des Funksignals oder vor dem Senden des Funksignals die an gegenüberliegenden Enden des Leckwellenleiters angeordneten Sende- und Empfangsvorrichtungen zueinander synchronisiert werden.

Das Wort "oder" umfasst insbesondere auch die Variante "und".

Für die mobile Einheit reicht es zu deren Ortung sende- oder empfangsfähig zu sein. Im Fall einer nur sendefähigen mobilen Einheit reicht es zu deren Ortung, wenn die beiden zuvor oder nachfolgend aufeinander synchronisierten Sende- und Empfangsvorrichtungen das vom Leckwellenleiter aufgenommene und weitergeleitete Funksignal der mobilen Einheit empfangen und auswerten können.

Die mobile Einheit umfasst insbesondere eine Antenne zum Senden bzw. Empfangen des Funksignals über eine Luftstrecke, während die beiden Sende- und Empfangsvorrichtungen insbesondere kabelgebunden an die gegenüberliegenden Enden des Leckwellenleiters angeschlossen sind.

So reicht es aber auch, wenn eine empfangsfähige mobile Einheit zwei von den beiden zuvor aufeinander synchronisierten Sende- und Empfangsvorrichtungen abgesendete Zeitstempel mit für die mobile Einheit ausreichend eindeutiger Zeitinformation empfängt, um daraus auf ihre eigene räumliche Position schließen zu können. Die Zeitinformationen können als solche von den Sende- und Empfangsvorrichtungen abgesendet werden oder aber als auch sonstige für die mobile Einheit ausreichend identifizierbare Signale zu z.B. der mobilen Einheit bekannten Aussendebedingungen abgesendet werden. Die Empfangszeitpunkte sind dann diejenigen in der mobilen Einheit, welche weiter verarbeitbaren Zeitstempeln entsprechen. Alternativ zum Versand der Zeitstempel ist auch ein Versand von Korrekturdaten umsetzbar.

Je nach Ausgestaltung und abhängig von Kenntnis ggf. weiterer Daten kann die zu ortende räumliche Position der mobilen Einheit absolut oder auch nur relativ zu dem Leckwellenleiter bestimmbar sein.

Das Synchronisieren erfolgt vorzugsweise vor dem Empfangen des Funksignals von der mobilen Einheit bzw.

vor dem Aussenden eines Zeitbestimmungssignals an die mobile Einheit. Das Synchronisieren kann aber auch nach dem Empfangen des Funksignals von der mobilen Einheit erfolgen, wenn daraufhin eine Synchronisierung erfolgt und eine bei der Synchronisierung ggf. festgestellte Zeitdifferenz auf die Empfangszeitpunkte angerechnet wird, um nachfolgend das Bestimmen der momentanen Position oder des Einkoppelorts auf Basis der angepassten Empfangszeitpunkte durchzuführen.

Das Funksignal wird von zumindest zwei aus der Gruppe der Sende- und Empfangsvorrichtungen und der mobilen Einheit (3) empfangen oder gesendet. Darunter ist insbesondere die Variante zu verstehen, dass das Funksignal von der mobilen Einheit gesendet und von den beiden Sende- und Empfangsvorrichtungen empfangen wird.

Auch kann das Funksignal von den beiden Sende- und Empfangsvorrichtungen ausgesendet und als zwei Signale durch die mobile Einheit empfangen werden, welche dann die Ortsbestimmung der eigenen Position durchführt oder die entsprechend ermittelten Empfangszeitpunkte zur weiteren Auswertung und Ortsbestimmung an eine andere und ggf. entfernte eigenständige Vorrichtung überträgt. Weitere Ausgestaltungen ermöglichen das Aussenden durch eine der beiden Sende- und Empfangsvorrichtungen und empfangen durch die mobile Einheit und durch die andere der beiden Sende- und Empfangsvorrichtungen. Auch ist ein verzögertes Senden möglich, bei dem z.B. eine Sende- und Empfangseinrichtung das Funksignal vor der anderen aussendet, wobei der zeitliche Abstand der mobilen Einheit bekannt ist oder mitgeteilt wird. Der zeitliche Abstand kann insbesondere so groß sein, dass sich die beiden Funksignale der beiden Sende- und Empfangsvorrichtungen nicht überlagern.

Gegenüber dem Prinzip von Systemen nach z.B. [Sym06] oder [Sym06] erfolgt statt einer Synchronisierung, Ortung und Entfernungsmessung im weitläufigen freien Raum insbesondere nur noch eine Synchronisierung der beiden Sende- und Empfangsvorrichtungen aufeinander, während die Ortung bzw. Entfernungsbestimmung der mobilen Einheit optional auch über ein anderes System unter Verwendung des Leckwellenleiters oder unter Verwendung ausschließlich des Leckwellenleitersystems erfolgen kann. So können bestehende Systeme, z.B. auf Leckwellenleitern beruhende Rundfunk- oder Mobilfunksysteme in Tunnelanlagen mittels der Synchronisierungstechnologie auf einfache Art um eine genaue oder verbesserte Ortungsfunktionalität erweitert werden.

Unter dem Funksignal wird dabei ein Signal verstanden, welches von dem Leiter des Leckwellenleiters über dessen Leckstellen in Form von z.B. Schlitzen am Einkoppelort und über eine Luftstrecke zu einer Antenne der mobilen Einheit oder in umgekehrter Richtung läuft. Insbesondere zählt zu em Funksignal auch eine Strecke, welche von dem Schlitz bzw. Einkoppelort durch den Leiter des Leckwellenleiters zu den beiden Sende- und Empfangsvorrichtungen läuft.

Ausführbar ist auch ein solches Verfahren, bei dem zum Synchronisieren von zumindest zwei der Sende- und Empfangsvorrichtungen , welche jeweils eine eigene Takteinrichtung aufweisen, eine der Sende- und Empfangsvorrichtungen als Senderstation und die andere damit zu synchronisierende als Empfängerstation bestimmt wird, bei dem zur Synchronisation der Takteinrichtungen und darüber der zu synchronisierenden der Sende- und Empfangsvorrichtungen , die Senderstation mindestens ein schmalbandiges Vorsignal über den Leckwellenleiter aussendet, Takteinrichtungen von Empfangseinheiten der Empfängerstation durch eine Ankopplung auf ein solches Vorsignal auf die Quelle des Vorsignals vorsynchronisiert werden, bei dem die Senderstation nach einer bestimmten Wartezeit ein breitbandiges Messsignal über den Leckwellenleiter aussendet und die Empfangseinheiten dieses Signal empfangen, die Empfangseinheiten das breitbandige Messsignal mit einem gleichartig modulierten Vergleichssignal korrelieren und bei dem basierend auf dem Korrelationsergebnis der Empfangszeitpunkt des breitbandigen Messsignals bestimmt und die Abweichung der Synchronisation der Takteinrichtungen bestimmt und kompensiert wird.

Bei solchen Verfahren kann zum Synchronisieren eine der Sende- und Empfangsvorrichtungen als Senderstation und die andere damit zu synchronisierende als Empfängerstation bestimmt werden, wobei in der Senderstation ein Sendesignal mit einer Signalquelle erzeugt und über den Leckwellenleiter ausgesendet wird und in der Empfängerstation ein entsprechendes Empfangssignal von dem Leckwellenleiter empfangen und unter Verwendung eines Empfänger-Signalquellensignals von einer an die senderseitige Signalquelle angepassten empfängerseitigen Signalquelle ausgewertet wird, wobei sowohl auf das Sendesignal als auch auf das Empfänger-Signalquellensignal eine gleichartige Frequenzmodulation angewendet wird, wobei das in der Empfängerstation empfangene Empfangssignal korreliert wird oder mit dem Empfänger-Signalquellensignal zu einem Mischsignal gemischt wird und das Mischsignal spektral analysiert wird.

Insbesondere kann auch bei solchen Ausgestaltungen zur Synchronisierung die mobile Einheit sowohl zu Zwecken der Kommunikation als auch zu Zwecken der Ortung mit beliebiger Signalform und -frequenz senden.

Insbesondere können einerseits für die Synchronisation der Sende- und Empfangsvorrichtungen und andererseits für die Ortung und/oder für die Kommunikation der mobilen Einheit gleiche oder gleichartige Sendesignale verwendet werden. Eine solche Verfahrerisweise ermöglicht die Verwendung nur weniger und einfach aufgebauter Empfangs- und Sendeeinrichtungen, insbesondere solche gemäß [Sym06] und [Sym16].

Zum Synchronisieren der beiden Sende- und Empfangsvorrichtungen zueinander können durch den Leckwellenleiter Synchronisierungssignale in einem anderen Frequenzbereich - insbesondere in einem nicht überlappenden Frequenzbereich - gesendet werden als einem Frequenzbereich, in dem Kommunikationssignale durch den Leckwellenleiter gesendet werden.

Solche für einerseits die Synchronisierungssignale und andererseits die Kommunikationssignale verschiedenen Frequenzbereiche können dauerhaft und in nie überlappenden Frequenzbereichen liegen. Umsetzbar sind aber auch Ausgestaltungen, bei denen die Frequenzbereiche oder Frequenzen nur zeitlich zugewiesen werden. Auch sind Mischformen möglich, bei dem aus einer Vielzahl einzelner Frequenzbänder individuell einzelne für Kommunikationssignale verwendet werden und andere ggf. sogar dazwischen liegende Frequenzbereiche, Frequenzen oder Frequenzbänder für die Synchronisierungssignale zugewiesen und verwendet werden. So wird u.a. auf einfache Art und Weise eine gleichzeitige fortwährende Synchronisierung und Kommunikation ermöglicht, ohne seitens der Synchronisierung die Kommunikation zu stören oder umgekehrt.

Optional kann auch eine Luftstrecke zum Einkoppelort als Einkoppelungsentfernung mittels einer Laufzeit zwischen dem Einkoppelort und der momentanen Position der mobilen Einheit ermittelt werden.

Umsetzbar ist auch ein solches Verfahren, bei dem das Funksignal identifizierbar ist, insbesondere vorgebbar oder vorgegeben. Beispielsweise wird verwendet eine Datenfolge, eine Kennung, einen Zeitschlitz, eine Frequenz, eine Frequenzfolge, eine kontinuierliche Welle mit Frequenzbreite oder -modulation oder eine Modulationsformen. Solche Kennungsmerkmale sind insbesondere elektronisch einfach trennbar.

Dies gilt insbesondere für die mobile Einheit, damit die Sende- und Empfangsvorrichtungen deren Signal eindeutig erkennen können und dessen Eintreffen zum Bestimmen des Eintreffzeitpunkts festlegen können. Auch ist so die Identifizierung einer bestimmten mobilen Einheit aus einer Vielzahl zu ortender oder auch nur kommunizierender mobiler Einheiten möglich.

Gemäß einfacherer Ausgestaltungen müssen die empfangenden Vorrichtungen das Funksignal jedoch nur empfangen und den Eintreffzeitpunkt erkennen können. Eine ausreichende Erkennung, um auf das empfangene Funksignal oder einen Teil davon korrelieren zu können ist zwar vorteilhaft zur Erhöhung der Genauigkeit aber nicht zwingend notwendig. Im einfachsten Fall müssen die das Funksignal gar nicht verstehen sondern nur als solches erkennen können.

Optional kann auch eine Information über aktive oder erfassbare solcher mobilen Einheiten an die Sende- und Empfangsvorrichtungen übertragen werden, insbesondere über den Leckwellenleiter übertragen werden. Eine solche Information ermöglicht ein gezieltes Suchen der Sende- und Empfangsvorrichtungen nach zu detektierenden mobilen Einheiten, um deren Funksignale in einer Vielzahl von durch den Leckwellenleiter laufenden Signalen gezielt erfassen zu können und so einen Verarbeitungsaufwand auf nur tatsächlich zu verarbeitende Daten bzw. Signale reduzieren zu können. Solche Informationen können z.B. von einer Leitwarte oder einem Wartungszentrum gesendet werden.

Eigenständig bevorzugt wird auch ein System zur Ortung einer momentanen Position oder eines Einkoppelorts zumindest einer in dem System befindlichen oder in das System einbringbaren mobilen Einheit mittels Leckwellenleiters, wobei solche mobilem Einheiten für Ortungszwecke zumindest sende- oder empfangsfähig sind. Dabei weist das System auf

- einen solchen Leckwellenleiter, in den von einer solchen mobilen Einheit oder aus dem zu einer solchen mobilen Einheit zumindest ein Funksignal über Leckstellen des Leckwellenleiters übertragbar ist,
- zwei Sende- und Empfangsvorrichtungen, die zum Empfangen oder Senden eines solchen Funksignals an gegenüberliegenden Enden des Leckwellenleiters angeordnet sind,
- wobei das Funksignal von der mobilen Einheit aussendbar und von den beiden Sende- und Empfangsvorrichtungen empfangbar ist oder je ein Funksignal von den beiden Sende- und Empfangsvorrichtungen aussendbar und von der mobilen Einheit empfangbar ist und
- zu derart empfangenen Funksignalen jeweils ein Empfangszeitpunkt ermittelbar ist und
- aus zwei solchen Empfangszeitpunkten die momentane Position oder der Einkoppelort bestimmbar ist,
- wobei vor dem Bestimmen der momentanen Position oder des Einkoppelorts oder vor dem Empfangen des Funksignals oder vor dem Senden des Funksignals die Sende- und Empfangsvorrichtungen zueinander synchronisiert werden,
- und wobei das System mit Komponenten zum Durchführen eines hier insbesondere als bevorzugt beschriebenen Verfahrens zur Ortung der momentanen Position oder des Einkoppelorts einer solchen mobilen Einheit ausgestattet ist.

Solche Komponenten zum Durchführen des Verfahrens können auf mehrere Sende- und Empfangsvorrichtungen und Kommunikationssystemvorrichtungen verteilt oder so weit möglich in wenigen solchen Vorrichtungen konzentriert sein. Auch eine Auslagerung eines Teils solcher Funktionen in eigenständige Wartungs- oder Steuerkomponenten ist umsetzbar.

Insbesondere handelt es sich um ein solches System, bei dem Empfangseinrichtungen einerseits für die Synchronisation der Sende- und Empfangsvorrichtungen und andererseits für die Ortung und/oder für die Kommunikation der mobilen Einheit verschieden ausgestaltet sind, insbesondere hinsichtlich deren Funktionalität verschieden ausgestaltet sind.

Die Empfangseinrichtungen können komplett verschieden hinsichtlich Aufbau und/oder Funktionalität sein. Es reicht, wenn sich die Sende- und Empfangsvorrichtungen mit einer Empfangseinrichtung untereinander synchronisieren können und mit einer insbesondere anderen oder anders eingerichteten Empfangseinrichtung für Ortungszwecke Funksignale der mobilen Einheit empfangen können. Ebenso reicht es gemäß insbesondere anderer Ausgestaltung, wenn die mobile Einheit mit einer Empfangseinrichtung über den Leckwellenleiter kommunizieren kann und zur Ortung mit einer insbesondere anderen oder anders eingerichteten Empfangseinrichtung je ein Funksignal von den beiden Sende- und Empfangsvorrichtungen empfangen kann. Dies ermöglicht beispielsweise eine nachträgliche Erweiterung bestehender Systeme, in die dann nur noch zusätzliche Komponenten und/oder zusätzliche Funktionalitäten implementiert werden.

Bei einem solchen System kann eine der Sende- und Empfangsvorrichtungen eine Kommunikationsfunktion zum Koordinieren von Ortungsverfahrensschritten übernehmen.

Ausgestaltbar ist ein derartiges System, bei dem ein Kommunikationssystem ergänzt ist um Ortungskomponenten oder Ortungsfunktionen, wobei die Sende- und Empfangsvorrichtungen und eine solche mobile Einheit und/oder eine Kommunikations-Sende- und Empfangsvorrichtung des Kommunikationssystems mit dem selben oder einem innerhalb eines Toleranzwertes nahezu selben Systemtakt betrieben werden. Auf Grund des quasi gleichen Systemtaktes, der in allen Modulen zur Verfügung steht, können bereits vorhandene technische Vorrichtungen zum Empfang der Signale verwendet werden, deren Systemtakt von den Synchronisationseinrichtungen vorgegeben wird. Dadurch wird der Entwicklungsaufwand geringer.

Umsetzbar ist auch ein System, bei dem vom Leckwellenleiter unabhängige Verbindungsmittel zur Übertragung von Synchronisationssignalen zwischen den Sende- und Empfangsvorrichtungen eingerichtet sind. Äquivalent zu der Übertragung von Synchronisations- und Antwortsignalen durch den Leckwellenleiter ist somit eine Übertragung über eine auch separate Verbindungen durch beispielsweise ein zusätzliches Kabel oder über eine Luftschnittstelle. In diesem Fall wird die Kabellänge des Leckwellenleiters für die Ortungsberechnungen separat bestimmt. Außerdem wird über einen zeitlichen Versatz die unterschiedliche Signallaufzeit im Leckwellenleiter und in dem vom Leckwellenleiter unabhängigen Verbindungsmittel berücksichtigt.

Eigenständig vorteilhaft ist auch eine Sende- und Empfangsvorrichtung zum Durchführen eines solchen Verfahrens oder eines solchen Systems mit Komponenten und/oder Funktionen zum Synchronisieren der Sende- und Empfangsvorrichtung mit einer anderen solchen Sende- und Empfangsvorrichtung oder auf eine andere solchen Sende- und Empfangsvorrichtung und mit Komponenten und/oder Funktionen zum Senden oder Empfangen eines Funksignals über einen Leckwellenleiter zum Orten einer mobilen Einheit.

Vorteilhaft ist eine solche Sende- und Empfangsvorrichtung, da sie zum Nachrüsten eines bereits bestehenden Kommunikationssystems oder Ortungssystems einsetzbar ist und einem solchen Kommunikations- oder Ortungssystem eine neue oder verbesserte Ortungsfähigkeit ermöglicht. Auch sind Ausgestaltungen umsetzbar, bei denen bestehende Sende- und Empfangsvorrichtungen von gattungsfremden Ortungssystemen mittels im einfachsten Fall installieren von Software zur Ausführung einer für das System geeigneten Funktionalität einrichtbar sind und so als zusätzliche Ortungskomponenten in einem Kommunikationssystem einsetzbar sind. Ggf. ist zusätzlich anstelle einer Antenne zum Senden und Empfangen von Synchronisations- und Ortungssignalen über eine Luftschnittstelle ein Kabelanschluss zum Anschließen an den Leiter des Leckwellenleiters auszubilden.

Eigenständig vorteilhaft ist auch eine mobile Einheit zum Durchführen eines solchen Verfahrens eines solchen Systems, welche mit Komponenten und/oder Funktionen zum Senden oder Empfangen eines von Kommunikationssignalen unabhängigen Funksignals zur Ortung ihrer momentanen Position oder eines Einkoppelorts ihrer Signale in den Leckwellenleiter ausgestattet ist.

Eigenständig vorteilhaft ist eine solche mobile Einheit, da sie insbesondere durch einfaches Nachrüsten mittels Software in einem derartigen System zur Ortung einsetzbar ist. Dies gilt insbesondere für solche Ausgestaltungen, bei denen die mobile Einheit nur ein Funksignal aussenden muss, welches dann als solches von den Sende- und Empfangsvorrichtungen erkannt und verarbeitet wird.

Ein Ausführungsbeispiel wird nachfolgend anhand der Zeichnung näher erläutert. Es zeigen:

Fig. 1    eine schematische Systemanordnung von Sende- und Empfangskomponenten längs eines Leckwellenleiters sowie Signalwege;

Fig. 2    bei einer solchen Anordnung für Berechnungen verwendete Längen bzw. Entfernungen in Luft bzw. als Länge eines elektrischen Kabels;

Fig. 3    einen Pegelplan der in einer solchen Anordnung herrschender Leistungspegel; und

Fig. 4    Komponenten und Signale einer weiteren Ausgestaltungsmöglichkeit.

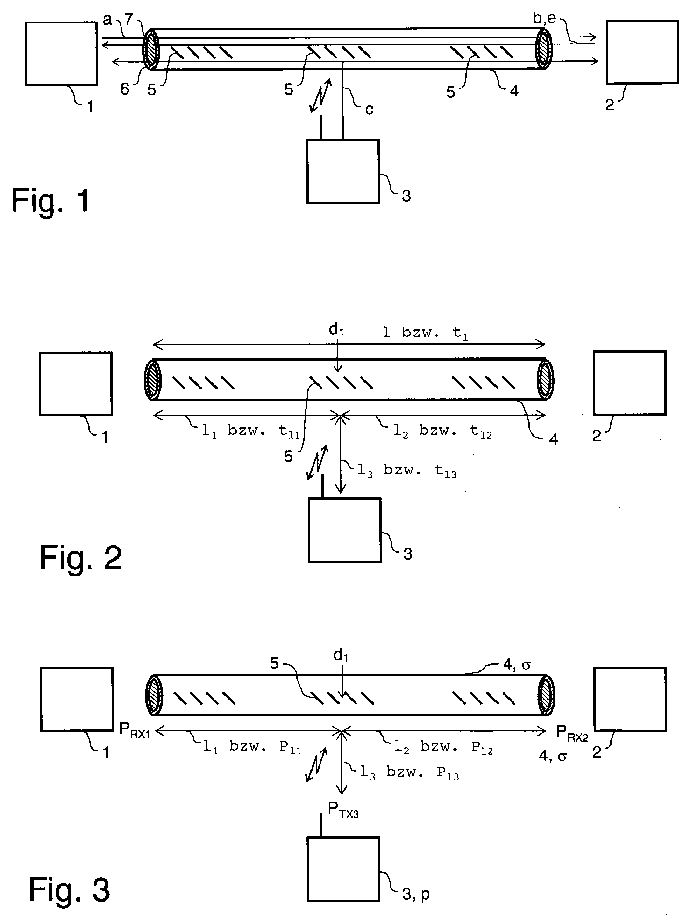

Fig. 1 zeigt zwei Sende- und Empfangsvorrichtungen 1, 2, eine mobile Einheit 3 und einen Wellenleiter, insbesondere sogenannten Schlitz- bzw. Leckwellenleiter 4. Ermöglicht werden soll mittels der beiden Sende- und Empfangsvorrichtungen 1, 2 und des Leckwellenleiters 4, eine solche mobile Einheit 3 zu orten, d.h. insbesondere deren momentane räumliche Position zu bestimmen.

Eine erste der beiden Sende- und Empfangsvorrichtungen 1 ist an einem ersten Ende des Leckwellenleiters 4 so angeordnet, dass eine von der ersten Sende- und Empfangsvorrichtung 1 erzeugte elektromagnetische Welle in den Leckwellenleiter 4 eingespeist wird und dass eine durch den Leckwellenleiter 4 heranlaufende elektromagnetische Welle von der ersten Sende- und Empfangsvorrichtung 1 empfangen wird. Die zweite der beiden Sende- und Empfangsvorrichtungen 2 ist an einem dem ersten Ende gegenüberliegenden zweiten Ende des Leckwellenleiters 4 so angeordnet, dass eine von der zweiten Sende- und Empfangsvorrichtung 2 erzeugte elektromagnetische Welle in den Leckwellenleiter 4 eingespeist wird und dass eine durch den Leckwellenleiter 4 heranlaufende elektromagnetische Welle von der zweiten Sende- und Empfangsvorrichtung 2 empfangen wird. So kann z.B. die zweiten Sende- und Empfangsvorrichtung 2 sich auf ein von der ersten Sende- und Empfangsvorrichtung 1 gesendetes und in der zweiten Sende- und Empfangsvorrichtung 2 empfangenes Signal synchronisieren.

Der Leckwellenleiter 4 weist Schlitze 5 auf. Eine Abschirmung 6 umgibt einen Leiter 7 bzw. ein Kabel so, dass elektromagnetische Wellen nicht von außen in den Leiter 7 bzw. nicht aus dem Leiter 7 nach außen gelangen können. Die Schlitze 5 sind in der Abschirmung 6 so ausgebildet bzw. so durch die Abschirmung 6 führend, dass durch den Leiter 7 laufende elektromagnetische Wellen durch die Schlitze 5 nach außen treten und dass von außen kommende elektromagnetische Wellen durch die Schlitze 5 in den Leiter 7 gelangen. Solche elektromagnetische Wellen sind insbesondere Signale, welche von den beiden Sende- und Empfangsvorrichtungen 1, 2, und von der mobilen Einheit 3 ausgesendet oder empfangen werden.

Die kombiniert eingesetzten beiden Sende- und Empfangsvorrichtungen 1, 2 sind ausgestaltet und geeignet, eine wechselseitige Synchronisierung der beiden Sende- und Empfangsvorrichtungen 1, 2 aufeinander durchzuführen. Die Genauigkeit der Synchronisierung ist dabei so, dass eine nachfolgend beschriebene Ortung der mobilen Einheit 3 ausreichend genau ermöglicht wird. Die beiden Sende- und Empfangsvorrichtungen 1, 2 sind dazu insbesondere nach [Sym16] ausgestaltet und geeignet, ein darin beschriebenes Verfahren zur wechselseitigen Synchronisierung durchzuführen. Zumindest ist die Synchronisierung so, dass eine der beiden Sende- und Empfangsvorrichtungen 1, 2 auf die andere synchronisierbar ist.

Es wird folgendes Verfahren zu Ortung einer solchen mobilen Einheit 3 entlang des Leckwellenleiters 4 vorgeschlagen:

Gemäß Fig. 1 und 2 wird jedes Ende des Kabels bzw. Leiters 7 des Leckwellenleiters 4 mit einer derart kombinierten Sende- und Empfangsvorrichtung 1, 2 ausgestattet. Als ersten Schritt sendet eine der beiden Einheiten, z.B. die erste Sende- und Empfangsvorrichtung 1 ein Synchronisationssignal a entlang des Leckwellenleiters 4. Dieses Synchronisationssignal a wird von der anderen, zweiten Sende- und Empfangsvorrichtung 2) aufgenommen und zur Bestimmung des eigenen Zeit- und Frequenzoffsets genutzt, z.B. gemäß [Sym 16]. Falls eine Signallaufzeit $t_1$ entlang des Kabels von dem ersten zum Zweiten Ende des Leiters 7 bekannt ist, wird diese direkt in der empfangenden Sende- und Empfangsvorrichtung 2 berücksichtigt. Andernfalls kann die empfangende Sende- und Empfangsvorrichtung 2 ein hochsynchrones Antwortsignal b entlang des Leckwellenleiters 4 zurücksenden, wobei die erste Sende- und Empfangsvorrichtung 1 aus dem Antwortsignal b die Signallaufzeit $t_1$ entlang des Leckwellenleiters 4 berechnet. Die beiden Sende- und Empfangsvorrichtungen 1, 2 bzw. deren Stationen tauschen dann diese Daten, d.h. insbesondere Zeit- und Frequenzoffset und die Signallaufzeit $t_1$ entlang des Leckwellenleiters 4, per Kommunikation aus. Alternativ führen beiden Sende- und Empfangsvorrichtungen 1, 2 diese Messungen abwechselnd durch, um jeweils die Signallaufzeit $t_1$ entlang des Leckwellenleiters 4 und sonstige zur Synchronisierung erforderlichen Informationen zu erhalten.

Als nächsten Schritt sendet nun die mobile Einheit 3 ein Funkssignal c zu einem Zeitpunkt, der als ein Startzeitpunkt $t_{start}$ verwendet wird. Dieses Funksignal c der mobilen Einheit 3 koppelt durch die Luft an einem Ort als Einkoppelort $d_1$, insbesondere einem oder mehreren der Schlitze 5 in den Leckwellenleiter 4 ein und wird an den Leitungsenden von den Sende- und Empfangsvorrichtungen 1, 2 empfangen. Der Eintreffzeitpunkt wird insbesondere hochgenau bzw. so genau wie für die Ortung erforderlich bestimmt. Idealerweise wird ein Eintreffszeitpunkt mit einer Laufzeitgenauigkeit von $\Delta t = \Delta d \, / \, c_{cable}$ bestimmt, also der Ortsgenauigkeit $\Delta d$ geteilt durch eine Ausbreitungsgeschwindigkeit im Kabel bzw. Leiter $c_{cable}$. Insbesondere erfolgt dabei eine Zeitstempelung mit Zeitstempeln $t_{stamp1}$ $t_{stamp2}$ für den Eintreffzeitpunkt an der ersten und an der zweiten Sende- und Empfangsvorrichtung 1, 2. Der jeweilige Eintreffzeitpunkt wird beispielsweise mittels Korrelation bestimmt.

Anschließend erfolgt ein Zeitstempelaustausch e. Dabei tauschen die beiden Sende- und Empfangsvorrichtungen 1, 2 insbesondere in zumindest einer Richtung die Eintreffzeit bzw. die Zeitstempel $t_{stamp1}$, $t_{stamp2}$ aus. Für eine Vergleichbarkeit der Zeitstempel $t_{stamp1}$, $t_{stamp2}$ kann eine zeitliche Synchronisierung der beiden Sende- und Empfangsvorrichtungen 1, 2 zuvor erfolgt sein oder anschließend erfolgen, um eine Rückrechnung der Zeitstempel $t_{stamp1}$, $t_{stamp2}$

auf eine gemeinsame Zeitbasis vorzunehmen. Dann wird aus der Differenz $\Delta t_{stamp}$ der beiden Eintreffzeitpunkte der Einkoppelort $d_1$ bzw. der Punkt, an dem die Einkoppelung in den Leckwellenleiter 4 stattgefunden hat, bestimmt. Dies erfolgt insbesondere gemäß

$$t_{stamp1} = t_{start} + t_{13} + t_{11}, \qquad (1)$$

$$t_{stamp2} = t_{start} + t_{13} + t_{12}, \qquad (2)$$

$$\Delta t_{stamp} = t_{stamp1} - t_{stamp2}$$
$$= t_{11} - t_{12} = 2t_{11} -$$
$$t_1, \Delta t_{stamp} = t_{stamp1} - t_{stamp2} = t_{t1} - t_{t2} = 2t_{t1} - t_l \quad \text{und} \qquad (3)$$

$$t_{11} = 0{,}5(\Delta t_{stamp} + t_1). \qquad (4)$$

Dabei ist $t_{11}$ eine Laufzeit von bzw. zu der ersten Sende- und Empfangsvorrichtung 1 zum Einkoppelort $d_1$, $t_{12}$ eine Laufzeit von bzw. zu der zweiten Sende- und Empfangsvorrichtung 2 zum Einkoppelort $d_1$, $t_{13}$ eine Laufzeit von bzw. zu der mobilen Einheit 3 zum Einkoppelort $d_1$, $l_1$ eine Einkoppelungsentfernung bzw. -strecke des Einkoppelorts $d_1$ längs des Leckwellenleiters 4 aus Sicht der ersten Sende- und Empfangsvorrichtung 1, $l_2$ eine Einkoppelungsentfernung bzw. - strecke des Einkoppelorts $d_1$ längs des Leckwellenleiters 4 aus Sicht der zweiten Sende- und Empfangsvorrichtung 2 und $l_3$ eine Einkoppelungsentfernung bzw. -strecke des Einkoppelorts $d_1$ aus Sicht der mobilen Einheit 3. Für die Einkoppelungsentfernung $l_1$ aus Sicht der ersten Sende- und Empfangsvorrichtung 1 ergibt sich damit

$$l_1 = 0{,}5(\Delta t_{stamp} + t_1)c_{cable} \qquad (5)$$

mit $c_{cable}$ als der bekannten oder messbaren Ausbreitungsgeschwindigkeit eines Signals im Kabel bzw. Leiter 7. Die von den Geräten entfernten Endpunkte der Einkoppelungsentfernungen $l_1$, $l_2$ und $l_3$ bzw. die entsprechenden Laufzeiten eines Signals bzw. einer Welle liegen alle am Einkoppelort $d_1$.

Besonders vorteilhaft ist dabei, dass auf Grund des beidseitigen Empfanges auch kleine Entfernungsunterschiede aufgelöst werden. Insbesondere können auch Entfernungsunterschiede unterhalb der Ausbreitungsgeschwindigkeit im Kabel $c_{cable}$ / (2,4 * $\Delta f$) mit $\Delta f$ als Bandbreite des Funksignals c aufgelöst werden. Zudem werden Kommunikationssignale nicht gestört, da es aufgrund der Ankopplung der beiden Sende- und Empfangsvorrichtungen 1, 2 an den Enden des Leckwellenleiters 4 keine Reflexion am losen Ende gibt. Des Weiteren können mehrere Signale gleichzeitig empfangen und korreliert werden, so dass eine Messrate nicht mit der Anzahl der über den Leckwellenleiter 4 kommunizierenden oder zu ortenden mobilen Einheiten 3 abnehmen muss.

Alternativ zur Abfolge, d.h. erstens einer Synchronisation und zweitens einer Messung kann auch zuerst eine solche Zeitstempelung in jeder der beiden Sende- und Empfangsvorrichtungen 1, 2 mit unterschiedlichen Zeitoffsets (Zeitversätzen) erfolgen und danach die Synchronisation durchgeführt werden, um danach die Eintreffzeitpunkte um die Zeitoffsets zwischen den beiden Sende- und Empfangsvorrichtungen 1, 2 zu korrigieren.

Ebenfalls alternativ können die beiden synchronisierten Sende- und Empfangsvorrichtungen 1, 2 am Ende des Leckwellenleiters 4 Funksignale senden, die von der mobilen Einheit 3 empfangen werden. Die mobile Einheit 3 bestimmt dann die Eintreffzeitpunkte in ihrer lokalen Zeit und bestimmt aus der Differenz der Eintreffzeitpunkte nach Gleichung (5) ihre Position selbst. Ein solcher Ansatz ist dann vorteilhaft, wenn die Position auf der bewegten mobilen Einheit 3 gewünscht wird oder wenn eine sehr große Anzahl von mobilen Einheiten 3 sich selber orten soll. Für die Positionierung ist es dabei unerheblich, ob die beiden Sende- und Empfangsvorrichtungen 1, 2 am Ende des Leckwellenleiters 4 zueinander hochgenau synchronisiert sind und dann senden oder ob zuerst die Signale an die mobile Einheit 3 gesendet werden und dann in einem zweiten Schritt Zeit- und Frequenzoffset von den Sende- und Empfangsvorrichtungen 1, 2 bestimmt werden und entsprechende Korrekturdaten für die Aussendezeitpunkte per Datenfunk verteilt werden.

Die Funkssignale c der mobilen Einheit 3 können dabei beliebiger Natur sein, beispielsweise ein GSM-Signal (GSM: Global System for Mobile Communications), UMTS- (Universal Mobile Telecommunications System), WLAN- (Wireless Local Area Network / funkgestütztes lokales Datennetz) Signale oder auch Signale eines Radarsystems zur lokalen Positionsbestimmung gemäß [Sym16]. Das Senden der verschiedenen vorstehend genannten Signale muss nicht kontinuierlich erfolgen. Für die Entfernungsmessung ist auf Grund der Differenzbildung keine 2-Wege-Kommunikation nötig. Auf Grund der Einkoppelung der Signale, insbesondere der Funksignale c im Nahfeld des Leckwellenleiters 4 werden in der technischen Realisierung breitbandige Signalformen, insbesondere Signalformen mit Bandbreite größer 1% der Trägerfrequenz, bevorzugt, um die Auswirkung eines frequenzabhängigen Laufzeitverhaltens des Leckwellenleiters 4 möglichst gering zu halten.

Neben dem Einkoppelpunkt 11 kann auch der Abstand des mobilen Systems bzw. der mobilen Einheit 3 zum Leckwellenleiterkabel 4 bestimmt werden. Hierfür wird dann die mobile Empfangsstation 3 ausgestaltet, das Synchronisationssignal a der beiden Sende- und Empfangsvorrichtungen 1, 2 zu empfangen und ihr Funksignal c hochgenau synchronisiert abzusenden.

Falls unterschiedliche Frequenzen für kabelgebundene Synchronisation, d.h. für das Synchronisationssignal a und das Antwortsignal b und für die Funksignale c der mobilen Einheit 3 verwendet werden, dann muss die Abstrahlcharakteristik des Leckwellenleiters 4 nur auf eine Signalfrequenz der mobilen Einheit 3 abgestimmt werden, da die geführte Welle des Synchronisationssignals a und des Antwortsignals b zur Synchronisation das Kabel nicht verlassen muss. Dadurch wird die Auslegung des Leckwellenleiterkabels 4 vereinfacht. Im Fall eines Leiters 7 in dem die elektrische Laufzeit bzw. Ausbreitungsgeschwindigkeit frequenzabhängig ist, und in dem unterschiedliche Frequenzen zur Synchronisation und zur Laufzeitmessung verwendet werden, werden auch die ggf. unterschiedlichen Ausbreitungsgeschwindigkeiten im Kabel bzw. Leiter 7 berücksichtigt:

$$\Delta t_{stamp} = t_{stamp1} - t_{stamp2} = t_{l1} - t_{l2} = 2t_{l1} - (c_{f12}/c_{f3})t_1 \quad (6)$$

wobei $c_{f12}$ eine Ausbreitungsgeschwindigkeit im Leiter 7 für eine Frequenz zur Synchronisation der Sende- und Empfangsvorrichtungen 1, 2 ist und $c_{f3}$ eine Ausbreitungsgeschwindigkeit einer Sendefrequenz der mobilen Einheit 3 im Leiter 7 ist. Damit ergibt sich die Einkoppelungsentfernung $l_1$ zu

$$l_1 = 0{,}5(c_{f3}\Delta t_{stamp} + c_{f12}t_1). \quad (7)$$

Auf Grund des gleichzeitigen Empfanges und der Bestimmung des Eintreffzeitpunktes an den beiden Sende- und Empfangsvorrichtungen 1, 2 kann nun die Amplitude der Signale der von der mobilen Einheit 3 gesendeten und in den beiden Sende- und Empfangsvorrichtungen 1, 2 empfangenen Signale zur Abschätzung eines Abstandes bzw. einer Einkoppelungsentfernung $l_3$ der mobilen Einheit 3 zu dem Kabel bzw. Leckwellenleiter 4 verwendet werden, wie dies auch anhand Fig. 3 skizziert ist. Da eine Kabeldämpfung $\sigma$, ein Einkoppelungsverlust $P_{coup}$ und der Einkoppelungspunkt sowie z.B. dessen erste Einkoppelungsentfernung $l_1$ bekannt sind, kann der entsprechende Anteil an der Kabeldämpfung $\sigma$ abgezogen werden und somit in erster Näherung mittels Freiraumdämpfung der Abstand bzw. die dritte Einkoppelungsentfernung $l_3$ von der mobilen Einheit 3 zum Kabel bzw. Leiter 7 berechnet oder abgeschätzt werden:

$$P_{RX1} = P_{TX2} - P_{l2} - P_{l1} = P_{TX2} - P_{l2} - \sigma_1 - P_{coup} = P_{tX3} - P_{l3} - P_{l1} = P_{tX3} - P_{l3} - \sigma l_1, \quad (8)$$

$$P_{l2} = P_{TX2} - P_{RX1} - \sigma_2 - P_{coup}. \quad (9)$$

Dabei ist $P_{RX1}$ eine Empfangsleistung an der ersten Sende- und Empfangsvorrichtung 1, $P_{TX3}$ eine Sendeleistung der mobilen Einheit 3, $P_{l1}$ eine übertragene Leistung vom Einkopplungsort $d_1$ zur ersten Sende- und Empfangsvorrichtung 1, $P_{l3}$ eine übertragene Leistung vom Einkopplungsort $d_1$ zur mobilen Einheit 3, und $P_{l3}$ eine Leistung über die Freifeldausbreitung.

Die Freiraumdämpfung kann bestimmt werden gemäß

$$P_{13} = (\lambda / (4\pi * l_3))^2$$

mit $\lambda = c_1/f$ als Wellenlänge des Signals, insbesondere Funksignals c, f als Frequenz des Signals und $c_1$ als Lichtgeschwindigkeit.

In entsprechender Weise kann die Rechnung für die zweite Seite zwischen der mobilen Einheit 3 und der zweiten Sende- und Empfangsvorrichtung 2 durchgeführt werden und zur Verbesserung der Genauigkeit können die beiden so erhaltenen Werte gemittelt werden.

Die Einkoppelungsentfernung $l_3$ des Einkoppelorts $d_1$ aus Sicht der mobilen Einheit 3 kann aus der Leistung $P_{13}$ über die Freifeldausbreitung näherungsweise bestimmt werden, wie dies für sich genommen aus Büchern über Signalausbreitung bekannt ist, beispielsweise aus "Global Positioning Systems, Inertial Navigation and Integration", Grewal et al, Wisley Interscience, 2001, Seite 45+46.. Alternativ zur Betrachtung der Freiraumdämpfung kann auch ein nichtlinearer Zusammenhang der Signalausbreitung im Leiter 7 in einer Nachschlagtabelle (engl. Look-up table) hinterlegt und für die Berechnungen werden.

Insbesondere kann aus u.a. der Einkoppelungsentfernung $l_3$ der mobilen Einheit 3 auch deren Position p im Raum relativ zu dem Leckwellenleiter 4 bzw. dessen Einkoppelort $d_1$ und/oder relativ zu einer oder beiden der Sende- und Empfangsvorrichtungen 1, 2 bestimmt werden.

Zudem kann die Differenz der Feldstärke auf beiden Seiten der Sende- und Empfangsvorrichtungen 1, 2 auch zur Plausibilisierung der Messergebnisse des Laufzeitverfahrens verwendet werden.

Eine weitere Ausprägung der Erfindung sieht eine Kombination mit einer 4-Ouadranten Antenne vor, deren Hauptabstrahlcharakteristik mittels Phasenschiebern immer senkrecht eingestellt wird. Die Senkrechte wird dabei mit einem 3D Beschleunigungssensor bestimmt.

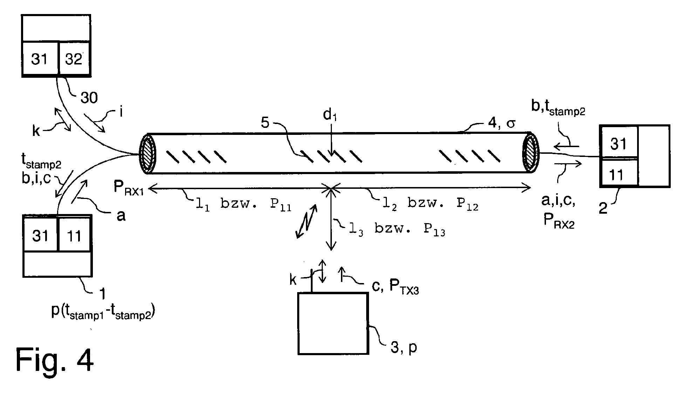

Eine weitere beispielhafte Ausgestaltung zeigt Fig. 4, wobei nachfolgend insbesondere Komponenten und Funktionen beschrieben werden, welche in den übrigen Ausführungen nicht oder anders beschrieben sind. Jedoch sind auch Kombinationen der verschiedenen Ausgestaltungen möglich. Ausgestaltungen nach Fig. 1 - 3 bieten sich insbesondere bei neu zu errichtenden Systemen an, während Ausgestaltungen nach Fig. 4 insbesondere auch zur Nachrüstung bestehender Systeme einsetzbar sind.

Dargestellt sind als Komponenten eines insbesondere üblichen Kommunikationssystems z.B. für Mobilfunk der Leckwellenleiter 4 und eine Kommunikations-Sende- und Empfangsvorrichtung 30. Die Kommunikations-Sende- und Empfangsvorrichtung 30 weist einen Kommunikations-Signalempfänger 31 zum Empfangen von über den Leckwellenleiter 4 geleiteten Funksignalen derartiger mobiler Einheiten 3 auf. Außerdem weist die Kommunikations-Sende- und Empfangsvorrichtung 30 einen Kommunikations-Signalsender 32 zum Senden von über den Leckwellenleiter 4 zu leitenden Funksignalen zu derartigen mobilen Einheiten 3 auf. Kommunikations-Signalempfänger 31 und Kommunikations-Signalsender 32 können auch als gemeinsame Einrichtung ausgebildet sein.

Die Kommunikations-Sende- und Empfangsvorrichtung 30 ist an einem der beiden Enden des Leckwellenleiters 4 so angeordnet, dass eine von der Kommunikations-Sende- und Empfangsvorrichtung 30 erzeugte elektromagnetische Welle zur Übertragung eines Kommunikationssignals k in den Leckwellenleiter 4 eingespeist wird und dass eine durch den Leckwellenleiter 4 als Kommunikationssignal k heranlaufende elektromagnetische Welle von der Kommunikations-Sende- und Empfangsvorrichtung 30 empfangen wird. Über die Schlitze 5 des Leckwellenleiters 4 treten solche Kommunikationssignale heraus oder hinein, so dass mittels der Kommunikationssignale über die Luftschnittstelle zu einer solchen mobilen Einheit 5 eine Kommunikation aufbaubar und durchführbar ist.

Zusätzlich ist an jedem Ende des Leckwellenleiters 4 eine der beiden Sende- und Empfangsvorrichtungen 1, 2 angekoppelt, z.B. über einen elektrischen Leiter angeschlossen.

Die beiden Sende- und Empfangsvorrichtungen 1, 2 weisen Sende- und Empfangseinrichtungen 11 auf, welche zur Kommunikation und Synchronisation der beiden Sende- und Empfangsvorrichtungen 1, 2 untereinander über den Leckwellenleiter 4 ausgelegt sind.

Die beiden Sende- und Empfangsvorrichtungen 1, 2 weisen außerdem jeweils einen Kommunikations-Signalempfänger 31 zum Empfangen von über den Leckwellenleiter 4 geleiteten Funksignalen solcher mobiler Einheiten 3 auf. Insbesondere können die Empfangsteile der Sende- und Empfangsvorrichtungen 1, 2 sogar komplett verschieden sein. Dadurch können beide solche Funksignale c empfangen und zur Bildung der Zeitstempel $t_{stamp1}$, $t_{stamp2}$ verwenden. Nachdem die Synchronisierung erfolgte und eine Sende- und Empfangsvorrichtungen 1, 2 den Zeitstempel $t_{stamp2}$ von der anderen empfangen hat, kann der Ort bzw. die Position p ($t_{stamp1}$-$t_{stamp2}$) der mobilen Einheit 3 abhängig von den Zeitstempeln $t_{stamp1}$,$t_{stam}p_2$ bestimmt werden.

Außerdem können die beiden Sende- und Empfangsvorrichtungen 1, 2 den Kommunikations-Signalempfänger 31 oder auch andere Kommunikationsmittel verwenden, um Informationen i über insbesondere momentan aktive solcher mobile Einheiten 3 zu empfangen. Dadurch können die beiden Sende- und Empfangsvorrichtungen 1, 2 eingehende Signale gezielt nach solchen Funksignalen c bestimmter zu überwachender mobiler Einheiten 3 überwachen und im Fall des Eintreffens eine Analyse zur Ortsbestimmung durchführen.

Solche Informationen i können durch die Kommunikations-Sende- und Empfangsvorrichtung 30 selber bestimmt sein oder von einer anderen Stelle, beispielsweise einem das gesamte System oder die Synchronisierungskomponenten steuernden Wartungszentrum bereitgestellt werden. Die Informationen i können z.B. automatisch bestimmte Informationen über momentan im Kommunikationssystem eingebuchte mobile Einheiten sein. Die Informationen i können z.B. auch indirekt bestimmte Informationen über in einem Tunnel arbeitende Arbeiter sein, denen eine mobile Einheiten 3 eindeutig zugeordnet ist und die sich beim Betreten des Tunnels mittels eines Personenzeiterfassungssystems eingebucht haben, wobei dann die persönlichen Zeiterfassungsdaten mit den Daten der mobile Einheit 3 aus einer Tabelle abrufbar sein können.

Insbesondere, wenn in den Sende- und Empfangsvorrichtungen 1, 2 die Sende- und Empfangseinrichtungen 11 und der Kommunikations-Signalempfänger 31 als getrennte Komponenten oder Funktionen ausgebildet sind, können für die Synchronisierung der Sende- und Empfangsvorrichtungen 1, 2 untereinander einerseits und für andererseits die Ortsbestimmung solcher mobiler Einheiten 3 verschiedene Frequenzen verwendet werden, welche sich nicht gegenseitig stören. Beispielsweise erfolgt dann die Synchronisation der Sende- und Empfangsvorrichtungen 1, 2 auch über den Leckwellenleiter, aber in einem anderem Frequenzbereich als einer Leckwellenleiter-Abstrahlfrequenz. Vorteilhaft können dann Synchronisierung und Ortsbestimmung gleichzeitig parallel zueinander und unabhängig voneinander durchgeführt werden. Eine solche Entkoppelung der Funktionen ist aber auch durch andere Maßnahmen möglich, z.B. Verwendung unterschiedlicher Zeitschlitze oder Zeiträume für Synchronisierung und Ortsbestimmung. Weiter Vorteile sind u.a. eine Nachrüstbarkeit und dass keine Abstrahlung der Synchronisationssignale erfolgt.

So kann eine für z.B. aus dem Mobilfunk sich genommen bekannte Kommunikation zwischen der Kommunikations-Sende- und Empfangsvorrichtung 30 und der mobilen Einheit 3 durchgeführt werden. Bei z.B. Verwendung z.B. verschiedener Signale, Frequenzbereiche oder Zeitschlitze für einerseits die Kommunikation und andererseits die Synchronisierung können die Kommunikation insbesondere auch ohne jegliche Einschränkungen gegenüber bekannten Systemen und die Ortung nebeneinander und unabhängig voneinander durchgeführt werden.

In den Sende- und Empfangsvorrichtungen 1, 2 können die Sende- und Empfangseinrichtungen 11 und der Kommunikations-Signalempfänger 31 auch als gemeinsame Einrichtung oder gemeinsame Funktion ausgebildet sein, wie dies insbesondere für Ausgestaltungen nach Fig. 1 umsetzbar ist. Dies gilt insbesondere dann, wenn gemeinsame Frequenzbereiche für die Synchronisierung und die Funksignale verwendet werden.

Umsetzbar ist eine Vielzahl von Kombinationen der verschiedenen beschriebenen Ausgestaltungsmerkmale. Auch weitere Modifikationen sind umsetzbar. Neben der beispielhaften Synchronisation der Sende- und Empfangsvorrichtungen 1, 2 mit anderem Frequenzbereich als Leckwellenleiter-Abstrahlfrequenz können, soweit in der jeweiligen Ausgestaltung gewünscht, auch andere Unterscheidungsmechanismen eingesetzt sein. So können alle sendenden Einrichtungen ein gleiches oder gleichartiges Sendesignal verwenden, bei dem z.B. eine gleichartige Modulation eingesetzt wird.

Zur Vereinfachung des Aufbaus kann z.B. auch eine der Sende- und Empfangsvorrichtungen 1, 2 die Funktion der Kommunikations-Sende- und Empfangsvorrichtung 30 mit übernehmen.

Vom Grundkonzept her können die verschiedenen sendenden Einrichtungen mit beliebiger Signalform und -frequenz senden.

Die mobile Einheit 3 kann zu ihrer Identifizierung seitens der Sende- und Empfangsvorrichtungen 1, 2 eine bekannte Datenfolge, insbesondere Kennung, senden, Dazu kann die mobile Einheit 3 z.B. auch gemäß auch den Sende- und Empfangsvorrichtungen 1, 2 bekannter Vorgabe vorgegebene Zeitschlitze, Frequenzen, Frequenzfolgen - z.B. im Sinne einer frequenzmodulierten kontinuierlichen Welle (FMCW)- oder unterschiedliche Modulationsformen verwenden. Eine Trennung der empfangenen Signale ist so auf einfache Art mittels elektronischer Verarbeitung über zB. Bandpass-Filter möglich.

Die Sende- und Empfangsvorrichtungen 1, 2 müssen ein Funksignal c von der mobilen Einheit 3 vom Grundprinzip her nur empfangen und den Eintreffzeitpunkt erkennen können. Insbesondere sollte mit einem Teil des erkannten Signals korreliert werden können, um eine Genauigkeit der Zeitinformation der zu erstellenden Zeitstempel zu erhöhen. Jedoch reicht bei nicht sehr genau erforderlicher Ortsbestimmung auch aus, wenn die Sende- und Empfangsvorrichtungen 1, 2 nur die Existenz eines eintreffenden Funksignals c erkennen können, es aber ansonsten vom Inhalt von dessen Daten nicht verstehen können.

Die Sende- und Empfangsvorrichtungen 1, 2 können insbesondere auf beliebige Signale korrelieren, wozu ggf. ein zweiter Empfangsteil in der Sende- und Empfangsvorrichtungen 1, 2 bereitgestellt wird. Anstelle oder zusätzlich zu einer allgemein durchführbaren Korrelation können auch ein Heruntermischen und spektrales Analysieren durchgeführt werden, was mit FMCW-Signalen gut geht.

Ergänzbar ist so z.B. ein bestehendes Kommunikationssystem um Ortungskomponenten oder -funktionen, wobei die hinzukommenden zweiten Einheiten mit demselben Systemtakt betrieben werden können. Beispielsweise reicht für viele heutige Systeme z.B. 100 ps Taktung, da die Signale durch Leckwellenleiter mit etwa 2m Ortungsgenauigkeit gehen und somit weniger Reflektionen eintreffen und weniger Mehrwegeausbreitungsstörungen zu berücksichtigen sind, als ansonsten bei für z.B. [Sym06] oder [Sym16] typischen Ortungssystemen in weitläufigen Hallen oder Geländen.

Bezugszeichenliste:

| | |
|---|---|
| 1 | erste Sende- und Empfangsvorrichtung |
| 2 | zweite Sende- und Empfangsvorrichtung |
| 3 | mobile Einheit |
| 4 | Wellenleiter, insbesondere Leckwellenleiter 4 |
| 5 | Schlitze |
| 6 | Abschirmung |
| 7 | Leiter |
| 11 | Sende- und Empfangseinrichtungen in 1, 2 |
| 30 | Kommunikations-Sende- und Empfangsvorrichtung |
| 31 | Kommunikations-Signalempfänger |
| 32 | Kommunikations-Signalsender |
| a | Synchronisierungssignal |
| b | Antwortsignal |
| c | Funksignal |
| $c_{cable}$ | Ausbreitungsgeschwindigkeit des Signals im Leiter |
| $c_{f12}$ | Ausbreitungsgeschwindigkeit der Synchronisationsfrequenz |
| $c_{f3}$ | Ausbreitungsgeschwindigkeit der Sendefrequenz der mobilen Einheit |
| $d_1$ | Einkoppelort der mobilen Einheit |
| e | Zeitstempelaustausch |
| i | Information über aktive mobile Einheiten |
| k | Kommunikationssignals |
| $l_1, t_1$ | Einkoppelungsentfernung / Laufzeit von $d_1$ zu 1 |
| $l_2, t_2$ | Einkoppelungsentfernung / Laufzeit von $d_1$ zu 2 |
| $l_3, t_3$ | Einkoppelungsentfernung / Laufzeit $d_1$ zu 3 |
| p | Position der mobilen Einheit 3 zu $d_1$, 1 und/oder 2 |
| $P_{11}$ | übertragene Leistung von $d_1$ zu 1 |
| $P_{13}$ | übertragene Leistung von $d_1$ zu 3 |
| $P_{13}$ | Leistung über die Freifeldausbreitung |
| $P_{coup}$ | Einkoppelungsverlust |
| $P_{RX1}$ | Empfangsleistung an 1 |
| $P_{TX3}$ | eine Sendeleistung der mobilen Einheit 3 |
| $t_1$ | Signallaufzeit durch Leckwellenleiter |
| $t_{11}$ | Laufzeit zwischen 1 und $d_1$ |
| $t_{12}$ | Laufzeit zwischen 2 und $d_1$ |
| $t_{13}$ | Laufzeit zwischen 3 und $d_1$ |
| $t_{start}$ | Startzeitpunkt |
| $t_{stamp1}$ | Zeitstempel als Empfangszeitpunkt an 1 |
| $t_{stamp2}$ | Zeitstempel als Empfangszeitpunkt an 2 |
| $\Delta d$ | Ortsgenauigkeit |
| $\Delta f$ | Bandbreite des Funksignals c |
| $\Delta t$ | Laufzeitgenauigkeit |
| $\Delta t_{stamp}$ | Differenz der beiden Eintreffzeitpunkte |
| $\sigma$ | Kabeldämpfung |

**Patentansprüche**

1. Verfahren zur Ortung einer momentanen Position (p) oder eines Einkoppelorts ($d_1$) einer für Ortungszwecke zumindest sende- oder empfangsfähigen mobilen Einheit (3) mittels eines Leckwellenleiters (4), bei dem

- von der mobilen Einheit (3) in den Leckwellenleiter (4) oder aus dem Leckwellenleiter (4) zu der mobilen Einheit (3) zumindest ein Funksignal (c) insbesondere über Leckstellen des Leckwellenleiters (4) übertragbar ist,
- das Funksignal (c) von der mobilen Einheit (3) gesendet und von zwei Sende- und Empfangsvorrichtungen (1, 2) empfangen wird oder je ein derartiges Funksignal von beiden Sende- und Empfangsvorrichtungen (1, 2) gesendet und von der mobilen Einheit (3) empfangen wird und
- zu den empfangenen Funksignalen (c) jeweils ein Empfangszeitpunkt ($t_{stamp1}$, $t_{stamp2}$) ermittelt wird und
- aus zwei solchen Empfangszeitpunkten ($t_{stamp1}$, $t_{stamp2}$) die momentane Position (p) oder der Einkoppelort ($d_1$) bestimmt wird,
- wobei vor dem Bestimmen der momentanen Position (p) oder des Einkoppelorts ($d_1$) oder vor dem Empfangen des Funksignals (c) oder vor dem Senden des Funksignals (c) die an gegenüberliegenden Enden des Leckwellenleiters (4) angeordneten Sende- und Empfangsvorrichtungen (1, 2) zueinander synchronisiert werden.

2. Verfahren nach Anspruch 1, bei dem

- zum Synchronisieren von zumindest zwei der Sende- und Empfangsvorrichtungen (1, 2), welche jeweils eine eigene Takteinrichtung aufweisen, eine der Sende- und Empfangsvorrichtungen (1, 2) als Senderstation und die andere damit zu synchronisierende als Empfängerstation bestimmt wird,
- zur Synchronisation der Takteinrichtungen und darüber der zu synchronisierenden der Sende- und Empfangsvorrichtungen (1, 2),
- die Senderstation mindestens ein schmalbandiges Vorsignal über insbesondere den Leckwellenleiter (4) aussendet, Takteinrichtungen von Empfangseinheiten der Empfängerstation durch eine Ankopplung auf ein solches Vorsignal auf die Quelle des Vorsignals vorsynchronisiert werden,
- die Senderstation nach einer bestimmten Wartezeit ein breitbandiges Messsignal über insbesondere den Leckwellenleiter (4) aussendet und die Empfangseinheiten dieses Signal empfangen, die Empfangseinheiten das breitbandige Messsignal mit einem gleichartig modulierten Vergleichssignal korrelieren und
- basierend auf dem Korrelationsergebnis der Empfangszeitpunkt des breitbandigen Messsignals bestimmt und die Abweichung der Synchronisation der Takteinrichtungen bestimmt und kompensiert wird.

3. Verfahren nach Anspruch 1 oder 2, bei dem

- zum Synchronisieren eine der Sende- und Empfangsvorrichtungen (1, 2) als Senderstation und die andere damit zu synchronisierende als Empfängerstation bestimmt wird,
- wobei in der Senderstation ein Sendesignal mit einer Signalquelle erzeugt und über insbesondere den Leckwellenleiter (4) ausgesendet wird und in der Empfängerstation ein entsprechendes Empfangssignal von insbesondere dem Leckwellenleiter (4) empfangen und unter Verwendung eines Empfänger-Signalquellensignals von einer an die senderseitige Signalquelle angepassten empfängerseitigen Signalquelle ausgewertet wird,
- sowohl auf das Sendesignal als auch auf das Empfänger-Signalquellensignal eine gleichartige Frequenzmodulation angewendet wird,
- das in der Empfängerstation empfangene Empfangssignal
- korreliert wird oder
- mit dem Empfänger-Signalquellensignal zu einem Mischsignal gemischt wird und das Mischsignal spektral analysiert wird.

4. Verfahren nach einem vorstehenden Anspruch, bei dem einerseits für die Synchronisation der Sende- und Empfangsvorrichtungen (1, 2) und andererseits für die Ortung und/oder für die Kommunikation der mobilen Einheit (3) gleiche oder gleichartige Sendesignale verwendet werden.

5. Verfahren nach einem vorstehenden Anspruch, bei dem zum Synchronisieren der beiden Sende- und Empfangsvorrichtungen (1, 2) zueinander durch den Leckwellenleiter (4) Synchronisierungssignale (a, b) in einem anderen Frequenzbereich - insbesondere in einem nicht überlappenden Frequenzbereich - gesendet werden als einem Frequenzbereich, in dem Kommunikationssignale (k) durch den Leckwellenleiter (4) gesendet werden.

6. Verfahren nach einem vorstehenden Anspruch, bei dem eine Luftstrecke zum Einkoppelort ($d_1$) als Einkoppelungs-entfernung ($l_3$) mittels einer Laufzeit ($t_3$) zwischen dem Einkoppelort ($d_1$) und der momentanen Position (p) der mobilen Einheit (3) ermittelt wird.

7. Verfahren nach einem vorstehenden Anspruch, bei dem das Funksignal (c) identifizierbar ist, insbesondere vorgebbar oder vorgegeben verwendet eine Datenfolge, eine Kennung, einen Zeitschlitz, eine Frequenz, eine Frequenzfolge, eine kontinuierliche Welle mit Frequenzbreite oder -modulation oder eine Modulationsformen.

8. Verfahren nach einem vorstehenden Anspruch, bei dem eine Information (i) über aktive oder erfassbare solcher mobilen Einheiten (3) an die Sende- und Empfangsvorrichtungen (1, 2) übertragen wird, insbesondere über den Leckwellenleiter (4) übertragen wird.

9. System zur Ortung einer momentanen Position (p) oder eines Einkoppelorts ($d_1$) zumindest einer in dem System befindlichen oder in das System reingebrachten mobilen Einheit (3) mittels Leckwellenleiters (4), wobei solche mobilen Einheiten (3) für Ortungszwecke zumindest sende- oder empfangsfähig sind und wobei das System aufweist

- einen solchen Leckwellenleiter (4), in den von einer solchen mobilen Einheit (3) oder aus dem zu einer solchen mobilen Einheit (3) zumindest ein Funksignal (c) über Leckstellen des Leckwellenleiters (4) übertragbar ist,
- zwei Sende- und Empfangsvorrichtungen (1, 2), die zum Empfangen oder Senden eines solchen Funksignals (c) an gegenüberliegenden Enden des Leckwellenleiters (4) angeordnet sind,
- wobei das Funksignal (c) von der mobilen Einheit (3) aussendbar und von den beiden Sende- und Empfangsvorrichtungen (1, 2) empfangbar ist oder je ein Funksignal von den beiden Sende- und Empfangsvorrichtungen (1, 2) aussendbar und von der mobilen Einheit (3) empfangbar ist und
- zu derart empfangenen Funksignalen (c) jeweils ein Empfangszeitpunkt ($t_{stamp1}$, $t_{stamp2}$) ermittelbar ist und
- aus zwei solchen Empfangszeitpunkten ($t_{stamp1}$, $t_{stamp2}$) die momentane Position (p) oder der Einkoppelort ($d_1$) bestimmbar ist,
- wobei vor dem Bestimmen der momentanen Position (p) oder des Einkoppelorts ($d_1$) oder vor dem Empfangen des Funksignals (c) oder vor dem Senden des Funksignals (c) die Sende- und Empfangsvorrichtungen (1, 2) zueinander synchronisiert werden,
- und wobei das System mit Komponenten zum Durchführen eines Verfahrens zur Ortung der momentanen Position (p) oder des Einkoppelorts ($d_1$) einer solchen mobilen Einheit (3) nach einem der vorstehenden Ansprüche ausgestattet ist.

10. System nach Anspruch 9, bei dem Empfangseinrichtungen (11, 31) einerseits für die Synchronisation der Sende- und Empfangsvorrichtungen (1, 2) und andererseits für die Ortung und/oder für die Kommunikation der mobilen Einheit (3) verschieden ausgestaltet sind, insbesondere hinsichtlich deren Funktionalität verschieden ausgestaltet sind.

11. System nach Anspruch 9 oder 10, bei dem eine der Sende- und Empfangsvorrichtungen (1) eine Kommunikationsfunktion übernimmt zum Koordinieren von Ortungsverfahrensschritten.

12. System nach einem der Ansprüche 9 bis 11, bei dem ein Kommunikationssystem ergänzt ist um Ortungskomponenten oder Ortungsfunktionen, wobei die Sende- und Empfangsvorrichtungen (1) und eine solche mobile Einheit (3) und/oder eine Kommunikations-Sende- und Empfangsvorrichtung des Kommunikationssystems mit dem selben oder einem innerhalb eines Toleranzwertes nahezu selben Systemtakt betrieben werden.

13. System nach einem der Ansprüche 9 bis 12, bei dem vom Leckwellenleiter (4) unabhängige Verbindungsmittel zur Übertragung von Synchronisationssignalen zwischen den Sende- und Empfangsvorrichtungen (1, 2) eingerichtet sind.

14. Sende- und Empfangsvorrichtung (1, 2) zum Durchführen eines Verfahrens nach einem der Ansprüche 1 bis 8 oder eines Systems nach einem der Ansprüche 9 bis 13 mit

- Komponenten und/oder Funktionen zum Synchronisieren der Sende- und Empfangsvorrichtung (1) mit einer anderen solchen Sende- und Empfangsvorrichtung (2) oder auf eine andere solchen Sende- und Empfangsvorrichtung (2) und
- Komponenten und/oder Funktionen zum Senden oder Empfangen eines Funksignals (c) über einen Leckwellenleiter (4) zum Orten einer mobilen Einheit (3).

15. Mobile Einheit (3) zum Durchführen eines Verfahrens nach einem der Ansprüche 1 bis 8 oder eines Systems nach einem der Ansprüche 9 bis 13, welche mit Komponenten und/oder Funktionen zum Senden oder Empfangen eines von Kommunikationssignalen unabhängigen Funksignals (c) zur Ortung ihrer momentanen Position (p) oder eines Einkoppelorts ($d_1$) ihrer Signale in den Leckwellenleiter (4) ausgestattet ist.

**Claims**

1. A method for locating a current position (p) or a coupling location ($d_1$) of a mobile unit (3) at least able to send or receive for location determining purposes, by way of a leaky waveguide (4), wherein

   - at least one radio signal (c) is transmittable from the mobile unit (3) into the leaky waveguide (4) or from the leaky waveguide (4) to the mobile unit (3), in particular through leaky portions of the leaky waveguide (4),
   - the radio signal (c) is sent by the mobile unit (3) and received by two transmitting and receiving apparatuses (1, 2), or such a radio signal is sent by each of two transmitting and receiving apparatuses (1, 2) and received by the mobile unit (3), and
   - a receiving time ($t_{stamp1}$, $t_{stamp2}$) is determined for each of the received radio signals (c), and
   - from two such receiving times ($t_{stamp1}$, $t_{stamp2}$) the current position (p) or the coupling location ($d_1$) is determined,
   - wherein prior to the determination of the current position (p) or the coupling location ($d_1$) or prior to receiving the radio signal (c) or prior to sending the radio signal (c), the transmitting and receiving apparatuses (1, 2) located at opposite ends of the leaky waveguide (4) are synchronized with each other.

2. The method according to claim 1, wherein

   - for synchronizing of at least two of the transmitting and receiving apparatuses (1, 2), which each have an own clock device, one of the transmitting and receiving apparatuses (1, 2) is determined as transmitter station and the other, to be synchronized with the former, is determined as receiver station,
   - for synchronizing the clock devices and thus the transmitting and receiving apparatuses (1, 2) to be synchronized,
   - the transmitter station sends at least a narrow-band pre-signal through, in particular, the leaky waveguide (4), clock devices of receiving units of the receiver station are pre-synchronized with the source of the pre-signal by coupling onto such pre-signal,
   - after a specific waiting period, the transmitter station sends a broadband measuring signal through, in particular, the leaky waveguide (4), and the receiving units receive this signal, the receiving units correlate the broadband measuring signal with a comparison signal modulated in the same way, and
   - based on the correlation result, the receiving time of the broadband measuring signal is determined and the deviation of the synchronization of the clock devices is determined and compensated.

3. The method according to claim 1 or 2, wherein

   - for synchronizing, one of the transmitting and receiving apparatuses (1, 2) is determined as transmitter station and the other as receiver station to be synchronized therewith,
   - wherein, in the transmitter station, a transmission signal is generated by a signal source and is sent through, in particular, the leaky waveguide (4), and a corresponding receiving signal is received in the receiver station by, in particular, the leaky waveguide (4) and evaluated by a receiver-side signal source adapted to the transmitter-side signal source by using a receiver signal-source signal in the receiver station,
   - a similar frequency modulation is applied to both the transmission signal and the receiver signal-source signal,
   - the receiving signal received in the receiver station
   - is correlated, or
   - is mixed with the receiver signal-source signal to create a mixed signal and the mixed signal is spectrally analyzed.

4. The method according to any preceding claim, wherein the same or similar transmission signals are used, on the one hand for the synchronization of the transmitting and receiving apparatuses (1, 2)n and, on the other hand, for at least one of location determining and for the communication of the mobile unit (3).

5. The method according to any preceding claim, wherein for synchronizing the two transmitting and receiving apparatuses (1, 2) with each other, synchronization signals (a, b) are sent through the leaky waveguide (4) in another frequency range - in particular in a non-overlapping frequency range - than a frequency range in which communication signals (k) are sent through the leaky waveguide (4).

6. The method according to any preceding claim, wherein an air gap to the coupling location ($d_1$) is determined as a coupling distance ($l_3$) by way of a propagation delay ($t_3$) between the coupling location ($d_1$) and the current position (p) of the mobile unit (3).

7. The method according to any preceding claim, wherein the radio signal (c) is identifiable, in particular, uses, in a predeterminable or predetermined way, a data sequence, an identification, a time slot, a frequency, a frequency sequence, a continuous wave with frequency width or modulation or a modulation scheme.

8. The method according to any preceding claim, wherein information (i) on active or detectable such mobile units (3) is transmitted to the transmitting and receiving apparatuses (1, 2), in particular through the leaky waveguide (4).

9. A system for locating a current position (p) or a coupling location ($d_1$) of at least one mobile unit (3) present in the system or introduced into the system, by way of a leaky waveguide (4), wherein such mobile units (3) are at least able to transmit or receive for location determining purposes, and wherein the system comprises:

- one said leaky waveguide (4) into which at least one radio signal (c) is transmittable from one said mobile unit (3), or from which at least one radio signal (c) is transmittable to such a mobile unit (3), through leaky portions of the leaky waveguide (4),
- two transmitting and receiving apparatuses (1, 2) arranged at opposite ends of the leaky waveguide (4) for receiving or transmitting one said radio signal (c),
- wherein the radio signal (c) is able to be sent by the mobile unit (3) and able to be received by the two transmitting and receiving apparatuses (1, 2), or such a radio signal (c) is able to be transmitted by each of the two transmitting and receiving apparatuses (1, 2) and able to be received by the mobile unit (3), and
- a receiving time ($t_{stamp1}$, $t_{stamp2}$) is able to be determined for each of the radio signals (c) received in such manner, and
- from two such receiving times ($t_{stamp1}$, $t_{stamp2}$) the current position (p) or the coupling location ($d_1$) is able to be determined,
- wherein prior to the determination of the current position (p) or the coupling location ($d_1$) or prior to receiving the radio signal (c) or prior to sending the radio signal (c), the transmitting and receiving apparatuses (1, 2) are synchronized with each other,
- and wherein the system is provided with components for performing a method for locating the current position (p) or the coupling location ($d_1$) of such a mobile unit (3) according to any of the preceding claims.

10. The system according to claim 9, wherein receiving devices (11, 31) are arranged differently, on the one hand for synchronizing the transmitting and receiving apparatuses (1, 2) and, on the other hand, for at least one of location determining and for the communication of the mobile unit (3), in particular arranged differently with respect to their functionality.

11. The system according to claim 9 or 10, wherein one of the transmitting and receiving apparatuses (1) takes over a communication function for the coordination of location determining method steps.

12. The system according to any one of claims 9 to 11, wherein a communication system is complemented by location determining components or location determining functions, wherein the transmitting and receiving apparatuses (1) and at least one of a mobile unit (3) and a communication transmitting and receiving apparatus of the communication system are operated with the same system clock, or are operated with almost the same system clock within a tolerance value.

13. The system according to any one of claims 9 to 12, wherein connecting elements independent from the leaky waveguide (4) are installed for transmitting synchronization signals between the transmitting and receiving apparatuses (1, 2).

14. A transmitting and receiving apparatus (1, 2) for performing a method according to any one of claims 1 to 8 or for operating a system according to any one of claims 9 to 13, comprising

- at least one of components and functions for synchronizing of the transmitting and receiving apparatus (1) with another such transmitting and receiving apparatus (2) or for synchronizing with another such transmitting and receiving apparatus (2), and
- at least one of components and functions for sending or receiving a radio signal (c) through a leaky waveguide (4) for determining the location of a mobile unit (3).

15. A mobile unit (3) for performing a method according to any one of claims 1 to 8 or for operating a system according to any one of claims 9 to 13 which is provided with at least one of components and functions for sending or receiving a radio signal (c) independent from communication signals for locating their current positions (p) or a coupling location ($d_1$) of their signals into the leaky waveguide (4).

**Revendications**

1. Procédé de localisation d'une position instantanée (p) ou d'un lieu de couplage ($d_1$) d'une unité mobile (3) au moins apte à émettre ou recevoir à des fins de localisation au moyen d'un guide d'ondes à fuite (4), selon lequel

   - au moins un signal radio (c) est apte à être transmis de l'unité mobile (3) au guide d'ondes à fuite (4) ou du guide d'ondes à fuite (4) à l'unité mobile (3) en particulier via des endroits de fuite du guide d'ondes à fuite (4),
   - le signal radio (c) est émis par l'unité mobile (3) et reçu par deux dispositifs émetteurs-récepteurs (1, 2) ou un signal radio de ce type est émis par chacun des deux dispositifs émetteurs-récepteurs (1, 2) et reçu par l'unité mobile (3) et
   - un moment de réception ($t_{stamp1}$, $t_{stamp2}$) est déterminé pour chacun des signaux radio (c) reçus et
   - l a position instantanée (p) ou le lieu de couplage ($d_1$) est déterminé à partir de deux tels moments de réception ($t_{stamp1}$, $t_{stamp2}$),
   - sachant que, avant la détermination de la position instantanée (p) ou du lieu de couplage ($d_1$) ou avant la réception du signal radio (c) ou avant l'émission du signal radio (c), les dispositifs émetteurs-récepteurs (1, 2) disposés à des extrémités opposées du guide d'ondes à fuite (4) sont synchronisés l'un par rapport à l'autre.

2. Procédé selon la revendication 1, selon lequel

   - pour la synchronisation d'au moins deux des dispositifs émetteurs-récepteurs (1, 2), lesquels présentent chacun un dispositif de cadence propre, un des dispositifs émetteurs-récepteurs (1, 2) est déterminé comme station émettrice et l'autre à synchroniser avec celle-ci comme station réceptrice,
   - pour la synchronisation des dispositifs de cadence et par ce biais des dispositifs émetteurs-récepteurs (1, 2) à synchroniser,
   - la station émettrice émet au moins un présignal à bande étroite via en particulier le guide d'ondes à fuite (4), des dispositifs de cadence d'unités réceptrices de la station réceptrice sont présynchronisés sur la source du présignal via une connexion à un tel présignal,
   - la station émettrice émet, après un temps d'attente déterminé, un signal de mesure à large bande via en particulier le guide d'ondes à fuite (4) et les unités réceptrices reçoivent ce signal, les unités réceptrices mettent en corrélation le signal de mesure à large bande avec un signal comparatif modulé de même façon et
   - sur la base du résultat de la corrélation, le moment de réception du signal de mesure à large bande est déterminé et l'écart de la synchronisation des dispositifs de cadence est déterminé et compensé.

3. Procédé selon la revendication 1 ou 2, selon lequel

   - pour la synchronisation, un des dispositifs émetteurs-récepteurs (1, 2) est déterminé comme station émettrice et l'autre à synchroniser avec celle-ci comme station réceptrice,
   - sachant que, dans la station émettrice, un signal d'émission est généré avec une source de signal et émis via en particulier le guide d'ondes à fuite (4) et, dans la station réceptrice, un signal de réception correspondant est reçu par en particulier le guide d'ondes à fuite (4) et évalué moyennant un signal de source de signal de récepteur provenant d'une source de signal côté récepteur adaptée à la source de signal côté émetteur,
   - une modulation de fréquence de même type est appliquée à la fois au signal d'émission et au signal de source de signal de récepteur,
   - le signal de réception reçu dans la station réceptrice
   - est mis en corrélation ou
   - est mélangé avec le signal de source de signal de récepteur pour former un signal mixte et le signal mixte est analysé spectralement.

4. Procédé selon une revendication précédente, selon lequel des signaux d'émission similaires ou de même type sont utilisés d'une part pour la synchronisation des dispositifs émetteurs-récepteurs (1, 2) et d'autre part pour la localisation et/ou pour la communication de l'unité mobile (3).

5. Procédé selon une revendication précédente, selon lequel, pour la synchronisation des deux dispositifs émetteurs-récepteurs (1, 2) l'un par rapport à l'autre par le guide d'ondes à fuite (4), des signaux de synchronisation (a, b) sont émis dans une autre plage de fréquence - en particulier dans une plage de fréquence non chevauchante - que dans une plage de fréquence dans laquelle des signaux de communication (k) sont émis par le guide d'ondes à fuite (4).

6. Procédé selon une revendication précédente, selon lequel un trajet aérien vers le lieu de couplage ($d_1$) est déterminé comme distance de couplage ($l_3$) moyennant une durée de fonctionnement ($t_3$) entre le lieu de couplage ($d_1$) et la position instantanée (p) de l'unité mobile (3).

7. Procédé selon une revendication précédente, selon lequel le signal radio (c) est identifiable et, utilisé en particulier de manière spécifiable ou spécifiée, est une suite de données, un indicatif, un créneau temporel, une fréquence, une suite de fréquences, une onde continue à largeur ou modulation de fréquence ou une forme de modulation.

8. Procédé selon une revendication précédente, selon lequel une information (i) est transmise aux dispositifs émetteurs-récepteurs (1, 2) via des unités mobiles (3) de ce type actives ou aptes à être saisies, et est transmise en particulier via le guide d'ondes à fuite (4).

9. Système de localisation d'une position instantanée (p) ou d'un lieu de couplage ($d_1$) d'au moins une unité mobile (3) se trouvant dans le système ou placée dans le système, au moyen d'un guide d'ondes à fuite (4), sachant que de telles unités mobiles (3) sont au moins aptes à émettre ou à recevoir à des fins de localisation et sachant que le système présente

- un tel guide d'ondes à fuite (4), vers ou depuis lequel au moins un signal radio (c) est apte à être transmis depuis une telle unité mobile (3) ou vers une telle unité mobile (3) via des endroits de fuite du guide d'ondes à fuite (4),
- deux dispositifs émetteurs-récepteurs (1, 2) qui sont disposés à des extrémités opposées du guide d'ondes à fuite (4) pour recevoir ou émettre un tel signal radio (c),
- sachant que le signal radio (c) est apte à être émis par l'unité mobile (3) et reçu par les deux dispositifs émetteurs-récepteurs (1, 2) ou un signal radio est apte à être émit par chacun des deux dispositifs émetteurs-récepteurs (1, 2) et reçu par l'unité mobile (3) et
- un moment de réception ($t_{stamp1}$, $t_{stamp2}$) est apte à être déterminé pour chacun des signaux radio (c) reçus de cette façon et
- la position instantanée (p) ou le lieu de couplage ($d_1$) est apte à être déterminé à partir de deux tels moments de réception ($t_{stamp1}$, $t_{stamp2}$),
- sachant que, avant la détermination de la position instantanée (p) ou du lieu de couplage ($d_1$) ou avant la réception du signal radio (c) ou avant l'émission du signal radio (c), les dispositifs émetteurs-récepteurs (1, 2) sont synchronisés l'un par rapport à l'autre,
- et sachant que le système est équipé de composants destinés à exécuter un procédé de localisation de la position instantanée (p) ou du lieu de couplage ($d_1$) d'une telle unité mobile (3) selon l'une des revendications précédentes.

10. Système selon la revendication 9, dans lequel des dispositifs récepteurs (11, 31) sont constitués diversement d'une part pour la synchronisation des dispositifs émetteurs-récepteurs (1, 2) et d'autre part pour la localisation et/ou pour la communication de l'unité mobile (3), en particulier sont constitués diversement eu égard à leur fonctionnalité.

11. Système selon la revendication 9 ou 10, dans lequel un des dispositifs émetteurs-récepteurs (1) prend en charge une fonction de communication pour la coordination d'étapes de procédé de localisation.

12. Système selon l'une des revendications 9 à 11, dans lequel un système de communication est complété par des composants de localisation ou des fonctions de localisation, sachant que les dispositifs émetteurs-récepteurs (1) et une telle unité mobile (3) et/ou un dispositif émetteur-récepteur de communication du système de communication sont exploités avec la même cadence de système ou avec une cadence de système pratiquement identique au sein d'une valeur de tolérance.

13. Système selon l'une des revendications 9 à 12, dans lequel des moyens de liaison indépendants du guide d'ondes à fuite (4) sont configurés pour la transmission de signaux de synchronisation entre les dispositifs émetteurs-récepteurs (1, 2).

14. Dispositif émetteur-récepteur (1, 2) destiné à exécuter un procédé selon l'une des revendications 1 à 8 ou un système selon l'une des revendications 9 à 13 avec

- des composants et/ou fonctions pour la synchronisation du dispositif émetteur-récepteur (1) avec un autre tel dispositif émetteur-récepteur (2) ou sur un autre tel dispositif émetteur-récepteur (2) et
- des composants et/ou fonctions pour l'émission ou la réception d'un signal radio (c) via un guide d'ondes à fuite (4) pour la localisation d'une unité mobile (3).

15. Unité mobile (3) destinée à exécuter un procédé selon l'une des revendications 1 à 8 ou un système selon l'une des revendications 9 à 13, laquelle est équipée de composants et/ou fonctions pour l'émission ou la réception d'un signal radio (c) indépendant de signaux de communication pour la localisation de leur position instantanée (p) ou d'un lieu de couplage ($d_1$) de leurs signaux dans le guide d'ondes à fuite (4).

Fig. 1

Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7594133 B2
- DE 10157931 C2
- US 7940743 B2
- WO 1994028432 A1

**In der Beschreibung aufgeführte Nicht-Patentliteratur**

- **WEBER.** Indoor RF Fingerprinting using leaky feeder cable considering environmental changes. *Proceedings of ACM Mobility Conference 2009, Sept. 2-4 2009*
- **NISHIKAWA et al.** A new position detection method using Leaky Coaxial Cable. *IEICE Electronics Express,* 2008, vol. 5 (8), 285-290
- **GREWAL et al.** Global Positioning Systems, Inertial Navigation and Integration. Wisley Interscience, 2001, 45-46